(19) Europäisches Patentamt
European Patent Office
Office européen des brevets

(11) **EP 4 394 974 A1**

(12) **EUROPEAN PATENT APPLICATION**

(43) Date of publication:
**03.07.2024 Bulletin 2024/27**

(21) Application number: **23206290.1**

(22) Date of filing: **27.10.2023**

(51) International Patent Classification (IPC):
*H01M 10/0525* (2010.01)    *H01M 50/417* (2021.01)
*H01M 50/42* (2021.01)    *H01M 50/426* (2021.01)
*H01M 50/431* (2021.01)    *H01M 50/443* (2021.01)
*H01M 50/446* (2021.01)    *H01M 50/451* (2021.01)

(52) Cooperative Patent Classification (CPC):
**H01M 10/0525; H01M 50/417; H01M 50/42;
H01M 50/426; H01M 50/431; H01M 50/443;
H01M 50/446; H01M 50/451**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.11.2022 KR 20220160639**

(71) Applicant: **Samsung SDI Co., Ltd.
Yongin-si, Gyeonggi-do 17084 (KR)**

(72) Inventors:
• **KIM, Gain**
  **17084 Yongin-si, Gyeonggi-do (KR)**
• **CHOI, Yeonjoo**
  **17084 Yongin-si, Gyeonggi-do (KR)**
• **GU, Jayeon**
  **17084 Yongin-si, Gyeonggi-do (KR)**
• **PARK, Sanghyun**
  **17084 Yongin-si, Gyeonggi-do (KR)**

(74) Representative: **Gulde & Partner
Patent- und Rechtsanwaltskanzlei mbB
Wallstraße 58/59
10179 Berlin (DE)**

(54) **SEPARATOR FOR RECHARGEABLE LITHIUM BATTERY AND RECHARGEABLE LITHIUM BATTERY INCLUDING THE SAME**

(57) A separator for a rechargeable lithium battery and a rechargeable lithium battery including the same are disclosed. For example, provided is a separator for a rechargeable lithium battery including a substrate and a coating layer on at least one surface of the substrate; the coating layer includes three-dimensional structured particles including an organic filler; and wire-type particles. An average length (D50) of the wire-type particles is at least 5 times as large as their average diameter (D50) measured by scanning electronic microscope (SEM) analysis.

FIG. 4

**Description**

## BACKGROUND OF THE INVENTION

**(a) Field of the Invention**

A separator for a rechargeable lithium battery and a rechargeable lithium battery including the same are disclosed.

**(b) Description of the Related Art**

Recently, rechargeable batteries have drawn attentions as an energy source. Among them, a rechargeable lithium battery having high energy density and discharge voltage has already been commercially available and widely used, but efforts to improve their performance are continuously being made.

A separator, which is an element constituting the rechargeable lithium battery, enables charging and discharging the rechargeable lithium battery by continuously maintaining ionic conductivity, while separating positive and negative electrodes each other.

In order to realize a high-capacity rechargeable lithium battery, it is necessary to reduce the thickness of a separator, which is a component that does not contribute to battery capacity. In addition, in order to safely drive a high-capacity and high-output rechargeable lithium battery, a separator with enhanced heat resistance is required.

## SUMMARY OF THE INVENTION

The invention is defined by the appended claims. The description that follows is subjected to this limitation. Any disclosure lying outside the scope of said claim7s is only intended for illustrative as well as comparative purposes.

In an embodiment, a separator for a rechargeable lithium battery includes a substrate and a coating layer on at least one surface of the substrate; wherein the coating layer may include three-dimensional structured particles including an organic filler; and wire-type particles. An average length (D50) of the wire-type particles is at least 5 times as large as their average diameter (D50) measured by scanning electronic microscope (SEM) analysis.

In another embodiment, a rechargeable lithium battery including the separator for a rechargeable lithium battery is provided.

Since the separator for a rechargeable lithium battery of an embodiment exhibits excellent heat resistance, it contributes to the safe operation of a high-capacity and high-output rechargeable lithium battery.

## BRIEF DESCRIPTION OF THE DRAWINGS

FIG. 1 is a view for explaining a "diameter" of the three-dimensional structured particle 1.
FIG. 2 is a view for explaining a "diameter" and a "length" of the wire-type particle 2.
FIG. 3 is a view schematically showing that only the three-dimensional structured particles 1 are coated on a substrate (not shown).
FIG. 4 is a view schematically showing that the three-dimensional structured particles 1 and the wire-type particles 2 are coated on a substrate (not shown).
FIGS. 5 and 6 are views schematically illustrating separators for a rechargeable lithium battery according to embodiments, respectively.
FIG. 7 is an exploded perspective view of a rechargeable lithium battery according to an embodiment.

## DETAILED DESCRIPTION OF THE EMBODIMENTS

Hereinafter, specific embodiments will be described in detail so that those of ordinary skill in the art can easily implement them

It should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

"Layer" herein includes not only a shape formed on the whole surface when viewed from a plan view, but also a shape formed on a partial surface.

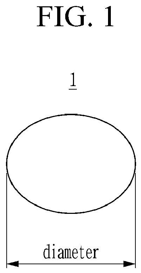

"Diameter" of the "three-dimensional structured particle" means an average particle diameter (D50) of the particles and may be measured by laser diffraction (LD). The method may be performed according to ISO 13320:2020. According to the IUPAC definition, the equivalent diameter of a non-spherical particle is equal to a diameter of a spherical particle that exhibits identical properties to that of the investigated non-spherical particle. For example, the "diameter" of the "three-dimensional structured particle" may represent a length of a straight line passing through the center of the particle and having the longest extension, as shown in FIG. 1. A length of the three-dimensional structured particles may be at most 2 times as large as its diameter.

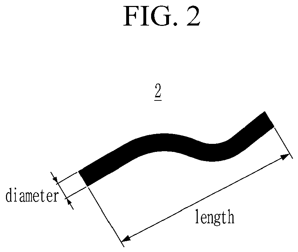

A length of the wire-type particles is at least 5 times as large as its diameter, in particular 10 times as large as its fiber diameter. In other words, the "wire-type particle" is a fiber having a length that is at least 5 times as large as its fiber diameter, in particular 10 times as large as its fiber diameter. A "diameter" of the wire-type particle means an average (fiber) diameter and the "length" means an average (fiber) length. An exemplary wire-type particle (or fiber) is shown in FIG. 2. The average (fiber) length and the average (fiber) diameter of the wire-type particles are each independently, the average length and the average diameter may be measured by scanning electronic microscope (SEM) analysis.

"Thickness" may be measured through a thickness measuring device or a photograph taken with an optical microscope such as a scanning electron microscope.

**(Separator for Rechargeable Lithium Battery)**

In an embodiment, a separator for a rechargeable lithium battery includes a substrate and a coating layer on at least one surface of the substrate; wherein the coating layer includes three-dimensional structured particles including an organic filler; and wire-type particles. An average length of the wire-type particles is at least 5 times as large as their average diameter, wherein the average length and the average diameter of the wire-type particles are each independently, the average length and the average diameter measured by scanning electronic microscope (SEM) analysis.

The separator for a rechargeable lithium battery according to an embodiment can exhibit excellent heat resistance even when the separator is formed thin, contributing to the safe operation of a high-capacity and high-output rechargeable lithium battery.

For example, the coating layer includes bimodal particles having different shapes, one of which is three-dimensional structured particles and the other is wire-type particles.

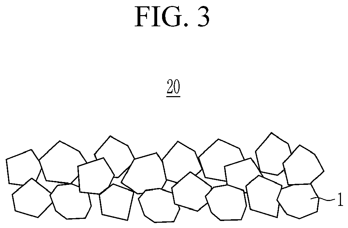

As shown in FIG. 3, when three-dimensional structured particles 1 alone are coated on a substrate (not shown), a plurality of empty spaces are created between the three-dimensional structured particles 1, which lowers packing density of a coating layer and eventually, deteriorates heat resistance of the separator.

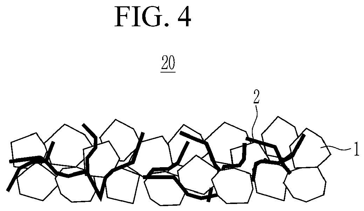

However, as shown in FIG. 4, when the three-dimensional structured particles 1 are coated with wire-type particles 2 on the substrate (not shown), the plurality of empty spaces is filled with the wire-type particles 2, increasing the packing density and the improving the heat resistance of the separator.

Accordingly, the separator for a rechargeable lithium battery according to an embodiment, in which the three-dimensional structured particles are coated with the wire-type particles as different bimodal particles, compared with the case of coating the three-dimensional structured particles alone on the substrate, may exhibit excellent heat resistance, even though the separator is thinly formed, due to the enhanced packing density of the coating layer. Herein, the three-dimensional structured particles 1 necessarily include an organic filler, wherein a diameter of the organic filler may not only be more easily controlled by changing synthesis conditions than that of an inorganic filler, but alto the organic filler may have excellent insulation resistance (for example, withstand voltage characteristics). Resultantly, the separator for a rechargeable lithium battery according to an embodiment contributes to safe driving of high-capacity and high-power rechargeable lithium batteries.

Hereinafter, the separator for a rechargeable lithium battery of an embodiment will be described in detail.

Heterogeneous Particles of Different Shapes

As described above, the coating layer includes wire-type particles and three-dimensional structured particles as heterogeneous particles having different shapes. Here, the three-dimensional structured particle may mean a particle having a three-dimensional (3D) shape, and the wire-type particle may mean a particle having a two-dimensional (2D) shape (or the shape of a fiber) with a diameter of 100 nm or less.

An average particle diameter (D50) of the three-dimensional structured particles may be 100 nm to 1,000 nm measured by laser diffraction. An average length of the wire-type particles may be 100 nm to 3 $\mu$m and an average

diameter of the wire-type particles may be 1 nm to 100 nm, wherein the average length and the average diameter of the wire-type particles are each independently, the average length and the average diameter measured by scanning electronic microscope (SEM) analysis. A ratio of the average length of the wire-type particles and the average diameter of the three-dimensional structured particles may be 30:1 to 1:10.

A ratio of the length of the wire-type particle and the diameter of the three-dimensional structured particle may be 20:1 to 1:10, or 10:1 to 1:5.

For example, the diameter of the three-dimensional structured particle may be 100 nm to 500 nm, 100 nm to 300 nm, or 200 nm to 300 nm.

Further, the length of the wire-type particle may be 100 nm to 1 $\mu$m, 100 nm to 0.5 $\mu$m, or 100 nm to 0.3 $\mu$m. In addition, the diameter of the wire-type particle may be 10 nm to 50 nm, and 20 nm to 30 nm.

If each of the above ranges is satisfied, the wire-type particles efficiently fill empty spaces between the three-dimensional structured particles, and thus the packing density of the coating layer can be remarkably improved. However, as the length of the wire-type particle is relatively longer compared to the diameter of the three-dimensional structured particle, the coating uniformity may decrease, and as the length of the wire-type particle becomes shorter, the packing density may decrease. Considering this relationship, the ratio of the length of the wire-type particle and the diameter of the three-dimensional structured particle can be adjusted.

On the other hand, a weight ratio of the wire-type particles and the three-dimensional structured particles may be 98:2 to 2:98, 90:10 to 10:90, 75:25 to 25:75, 60:40 to 40:60 or 50:50.

Within these ranges, the wire-type particles efficiently fill empty spaces between the three-dimensional structured particles, so that the packing density of the coating layer can be remarkably improved. However, as the weight of the wire-type particles increases relative to the weight of the three-dimensional structured particles, dispersibility decreases, and as the weight decreases, the heat resistance effect may decrease. Considering this relationship, the weight ratio of the wire-type particles and the three-dimensional structured particles can be adjusted.

Three-dimensional Structured Particles

The three-dimensional structured particles are particles having a three-dimensional (3D) shape, and may have, for example, a spherical shape, an elliptical shape, or a polyhedron shape.

As mentioned above, the three-dimensional structured particles necessarily include an organic filler, and the organic filler maintains its particle shape even after a thermal compression process, thereby contributing to the heat resistance of the separator.

For example, a weight average molecular weight of the organic filler may be 10,000 g/mol to 1,000,000 g/mol. Within the above range, it can contribute to the heat resistance and insulation resistance of the separator. For example, the weight average molecular weight of the organic filler may be 10,000 g/mol or more, 50,000 g/mol or more, or 100,000 g/mol or more, and 1,000,000 g/mol or less, 600,000 g/mol or less, or 350,000 g/mol or less.

For example, the organic filler may include a crosslinked acrylate-based copolymer, a poly(vinylidene fluoride, PVdF)-based copolymer, a styrene-acrylate-based copolymer, an acrylic acid-based copolymer, or a combination thereof. For example, the organic filler may be a crosslinked acrylate-based copolymer, which maintains the particle shape after the thermal compression process and improves the heat resistance of the separator.

The three-dimensional structured particles may further include an inorganic filler, and the inorganic filler is a material contributing to the heat resistance of the separator, and may include $Al_2O_3$, boehmite, $B_2O_3$, $Ga_2O_3$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, or a combination thereof. For example, the inorganic filler may be $Al_2O_3$ or boehmite. If the three-dimensional particles further include an inorganic filler, heat resistance of the separator may be enhanced, but sufficient heat resistance may be exhibited with the organic filler alone.

Wire-type Particles

The wire-type particles are particles having a two-dimensional (2D) shape, and have a shape that is advantageous for the wire-type particles to efficiently fill empty spaces between the three-dimensional structured particles. The wire-type particles are fibers.

The wire-type particles may include (fibrillar) boehmite, carbon nanotubes, silver nanowires, boron carbide nanowires, nanocellulose, copper hydroxide nanowires, silicon monoxide nanowires, hydroxyapatite nanowires, or combinations thereof. For example, the wire-type particles may be (fibrillar) boehmite.

Binder

The coating layer may further include at least one binder selected from polyvinylidene fluoride (PVdF), a styrene-butadiene rubber (SBR), carboxymethylcellulose (CMC), a polyvinylidene fluoride-hexafluoropropylene (PVdF-HFP) copolymer, ethylene vinyl acetate (EVA), hydroxyethyl cellulose (HEC), polyvinyl alcohol (PVA), polyvinyl butyral (PVB), an ethylene-acrylic acid copolymer, acrylonitrile, a vinyl acetate derivative, polyethylene glycol, and an acrylic rubber, for adhesion between the particles constituting the coating layer, adhesion between the particles constituting the coating layer and the substrate.

A ratio of a total weight of the particles constituting the coating layer (three-dimensional structured particles and wire-type particles) and a weight of the binder may be 10:1 to 50:1. Within the above range, it is possible to sufficiently develop heat resistance by the particles constituting the coating layer while securing adhesion between the particles constituting the coating layer and adhesion between the particles constituting the coating layer and the substrate.

For example, as the content of the binder is relatively high within the above range, heat resistance may decrease, and as the content of the binder decreases, binding force with the substrate may decrease. Considering such a trade-off relationship, the weight ratio of components of the coating layer may be adjusted.

Thickness of Coating Layer

A thickness of the coating layer may be 10 μm or less (however, greater than 0 μm). Because the coating layer includes wire-type particles together with three-dimensional structured particles as heterogeneous particles having different shapes, sufficient heat resistance may be obtained even with such a thin thickness.

For example, a thickness of the coating layer may be 0.5 μm to 10 μm, or 1 μm to 6 μm. If the thickness of the heat resistant layer is within the above range, heat resistance is improved, suppressing internal short circuit of the battery, securing a stable separator, and suppressing an increase in internal resistance of the battery.

Substrate

The substrate may include polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof, but is not limited thereto.

Examples of the polyolefin include polyethylene and polypropylene, and examples of the polyester include polyethylene terephthalate and polybutylene terephthalate.

In addition, the substrate may be a non-woven fabric or a porous substrate in the form of a woven fabric, and may have a single film or multi-layer structure. For example, the substrate may include a polyethylene single film, a polypropylene single film, a polyethylene/polypropylene double film, a polypropylene/polyethylene/polypropylene triple film, a polyethylene/polypropylene/polyethylene triple film, and the like.

The substrate may have a thickness of 1 to 40 μm, for example, 1 to 30 μm, 1 to 20 μm, 5 to 15 μm, or 5 to 10 μm. If the thickness of the substrate is within the above range, a short circuit between the positive electrode and the negative electrode may be prevented without increasing the internal resistance of the battery.

Separator Structure

As mentioned above, the separator of an embodiment includes a substrate; and a coating layer on one surface or both surfaces of the substrate.

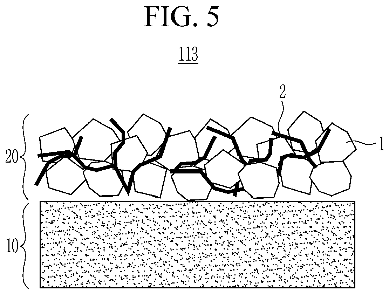

For example, as shown in FIG. 5, the separator of an embodiment may include a substrate 10 and a coating layer 20 on a first surface of the substrate 10.

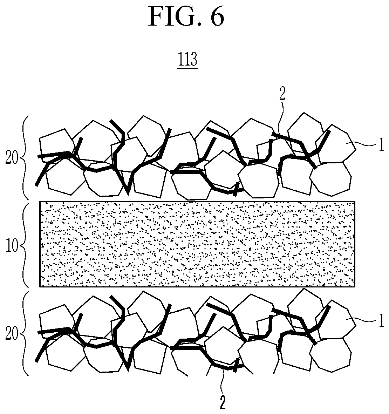

In addition, as shown in FIG. 6, the separator for a rechargeable lithium battery may also include a substrate 10; a coating layer 20 on the first and second surfaces of the substrate 10, respectively.

In the above two examples, the coating layer includes three-dimensional structured particles including an organic filler; and wire-type particles.

As shown in FIG. 6, if the coating layer is formed on both surfaces (first and second surfaces) of the substrate on one surface of the substrate, it may have more improved heat resistance compared to the case where the coating layer is formed on one surface (first surface) alone of the substrate as shown in in FIG. 5.

Heat Resistance of Separator

As mentioned above, the separator of an embodiment can exhibit excellent heat resistance even with a thin thickness.

For example, the separator may have an average thermal shrinkage rate of 5% or less, for example, 4% or less, 3% or less, 2% or less, or 1% or less in a longitudinal direction (MD direction, Machine Direction) and a transverse direction (TD direction) measured after exposure at 150 to 250 °C for 1 hour. Accordingly, the separator of an embodiment can prevent shrinkage of the substrate due to heat and separation between the coating layer and the substrate.

A method of measuring the thermal shrinkage rate of the separator is not particularly limited but may be any commonly-used method in the technical field of the present invention. Non-limiting examples of the method of measuring the thermal shrinkage rate of the separator are as follow: performed by cutting the manufactured separator to have a size of a width (MD) of about 10 cm X a length (TD) of about 10 cm, storing it in a 150°C to 250 °C chamber for 1 hour, and then, measuring shrinkage degrees in a machine direction (MD) and a perpendicular direction (TD) to calculate the thermal shrinkage rate.

**(Rechargeable Lithium Battery)**

Another embodiment provides a rechargeable lithium battery including the aforementioned separator for a rechargeable lithium battery of an embodiment.

The aforementioned separator for a rechargeable lithium battery of an embodiment exhibits excellent thermal stability, structural stability, adhesive strength, air permeability, etc., and contributes to the stable operation of a rechargeable lithium battery.

Hereinafter, the rechargeable lithium battery will be described in detail, except for overlapping descriptions with the foregoing.

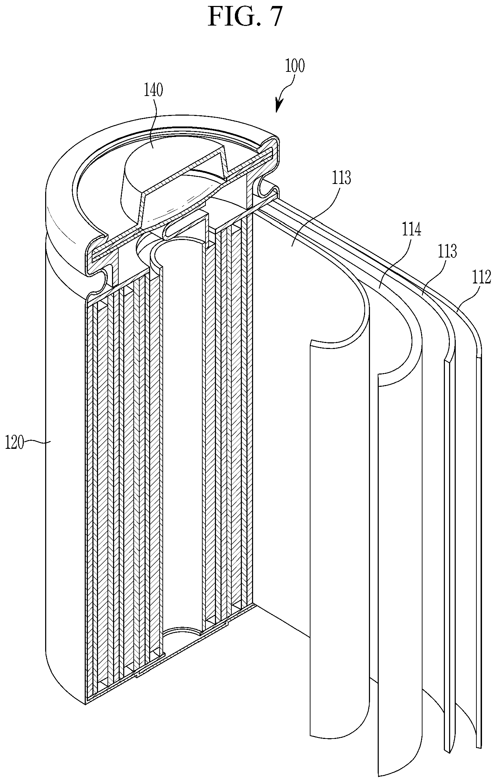

FIG. 7 is an exploded perspective view of a rechargeable lithium battery according to an embodiment. Referring to FIG. 7, a rechargeable lithium battery 100 according to an embodiment includes a battery cell including a negative electrode 112, a positive electrode 114 facing the negative electrode 112, a separator 113 disposed between the negative electrode 112 and the positive electrode 114, and an electrolyte solution (not shown) immersed in the negative electrode 112, positive electrode 114 and separator 113, a battery case 120 housing the battery cell, and a sealing member 140 sealing the battery case 120.

Positive Electrode

The positive electrode 114 includes a positive electrode current collector and a positive electrode active material layer formed on the positive electrode current collector. The positive electrode active material layer includes a positive electrode active material, a positive electrode binder, and optionally a conductive material.

The positive electrode current collector may use aluminum, nickel, and the like, but is not limited thereto.

The positive electrode active material may use a compound capable of intercalating and deintercalating lithium. For example, at least one of a composite oxide or a composite phosphate of a metal selected from cobalt, manganese, nickel, aluminum, iron, or a combination thereof and lithium may be used. For example, the positive electrode active material may be a lithium cobalt oxide, a lithium nickel oxide, a lithium manganese oxide, a lithium nickel cobalt manganese oxide, a lithium nickel cobalt aluminum oxide, a lithium iron phosphate, or a combination thereof.

The binder improves binding properties of positive electrode active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto. These may be used alone or as a mixture of two or more.

The conductive material improves conductivity of an electrode and examples thereof may be natural graphite, artificial graphite, carbon black, a carbon fiber, a metal powder, a metal fiber, and the like, but are not limited thereto. These may be used alone or as a mixture of two or more. The metal powder and the metal fiber may use a metal of copper, nickel, aluminum, silver, and the like.

Negative Electrode

The negative electrode 112 includes a negative electrode current collector and a negative electrode active material layer formed on the negative electrode current collector.

The negative electrode current collector may use copper, gold, nickel, a copper alloy, and the like, but is not limited thereto.

The negative electrode active material layer may include a negative electrode active material, a negative electrode binder, and optionally a conductive material. The negative electrode active material may be a material that reversibly intercalates/deintercalates lithium ions, a lithium metal, a lithium metal alloy, a material capable of doping and dedoping lithium, a transition metal oxide, or a combination thereof.

The material that reversibly intercalates/deintercalates lithium ions may be a carbon material which is any generally-used carbon-based negative electrode active material, and examples thereof may be crystalline carbon, amorphous carbon, or a combination thereof. Examples of the crystalline carbon may be graphite such as irregular and crosslinked, sheet-shape, flake, spherical shape or fiber-shaped natural graphite or artificial graphite. Examples of the amorphous carbon may be soft carbon or hard carbon, a mesophase pitch carbonized product, calcined coke, and the like. The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn. The material capable of doping and dedoping lithium may be Si, $SiO_x$ (0<x<2), a Si-C composite, a Si-Y alloy, Sn, $SnO_2$, a Sn-C composite, a Sn-Y alloy, and the like, and at least one of these may be mixed with SiOz. Specific examples of the element Y may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The transition metal oxide may be vanadium oxide, lithium vanadium oxide, and the like.

The binder and the conductive material used in the negative electrode 112 may be the same as the binder and the conductive material of the aforementioned positive electrode 114.

The positive electrode 114 and the negative electrode 112 may be manufactured by mixing each active material composition including each active material and a binder, and optionally a conductive material in a solvent, and coating the active material composition on each current collector. Herein, the solvent may be N-methylpyrrolidone, and the like, but is not limited thereto. The electrode manufacturing method is well known, and thus is not described in detail in the present specification.

Electrolyte Solution

The electrolyte solution includes an organic solvent a lithium salt.

The organic solvent serves as a medium for transmitting ions taking part in the electrochemical reaction of a battery. The organic solvent may be a carbonate-based solvent, an ester-based solvent, an ether-based solvent, a ketone-based solvent, an alcohol-based solvent, and an aprotic solvent. The carbonate-based solvent may be dimethyl carbonate, diethyl carbonate, dipropyl carbonate, methylpropyl carbonate, ethylpropyl carbonate, methylethyl carbonate, ethylene carbonate, propylene carbonate, butylene carbonate, and the like, and the ester-based solvent may be methyl acetate, ethyl acetate, n-propyl acetate, 1,1-dimethylethyl acetate, methylpropionate, ethylpropionate, $\gamma$-butyrolactone, decanolide, valerolactone, mevalonolactone, caprolactone, and the like. The ether-based solvent may be dibutyl ether, tetraglyme, diglyme, dimethoxyethane, 2-methyltetrahydrofuran, tetrahydrofuran, and the like, and the ketone-based solvent may be cyclohexanone, and the like. The alcohol-based solvent may be ethanol, isopropyl alcohol, and the like, and the aprotic solvent may be nitriles such as R-CN (R is a C2 to C20 linear, branched, or cyclic hydrocarbon group, a double bond, an aromatic ring, or an ether bond), and the like, amides such as dimethyl formamide, dioxolanes such as 1,3-dioxolane, sulfolanes, and the like.

The organic solvent may be used alone or in a mixture of two or more, and if the organic solvent is used in a mixture of two or more, the mixture ratio may be controlled in accordance with a desirable cell performance.

The lithium salt is dissolved in an organic solvent, supplies lithium ions in a battery, basically operates the rechargeable lithium battery, and improves lithium ion transportation between positive and negative electrodes therein. Examples of the lithium salt may include $LiPF_6$, $LiBF_4$, $LiSbF_6$, $LiAsF_6$, $LiN(SO_3C_2Fs)_2$, $LiN(CF_3SO_2)_2$, $LiC_4F_9SO_3$, $LiClO_4$, $LiAlO_2$, $LiAlCl_4$, $LiN(C_xF_{2x+1}SO_2)(C_yF_{2y+1}SO_2)$ (x and y are natural numbers), LiCl, Lil, $LiB(C_2O_4)_2$, or a combination thereof, but are not limited thereto.

The lithium salt may be used in a concentration ranging from 0.1 M to 2.0 M. If the lithium salt is included within the above concentration range, an electrolyte solution may have excellent performance and lithium ion mobility due to optimal conductivity and viscosity of the electrolyte solution.

Examples and comparative examples of the present invention are described below. The following examples are only examples of the present invention, but the present invention is not limited to the following examples.

**Example 1**

**(1) Preparation of Composition for Coating Layer**

As an organic filler among three-dimensional structured particles, an irregular and crosslinked acrylate-based copolymer(PMMA) having a weight average molecular weight of 300,000 g/mol and an average diameter (D50) of 200 nm was prepared. In addition, as a wire-type particle, boehmite having an average length of 1 $\mu$m and an average diameter of 30 nm, wherein the average length and the average diameter of the wire-type particles are each independently, the average length and the average diameter was prepared.

In water as a solvent, the organic filler and the wire-type particle were mixed in a weight ratio of 20:80, preparing a composition for a coating layer according to Example 1.

**(2) Manufacture of Separator**

As a substrate, polyethylene with a thickness of 9 $\mu$m (Manufacturer: SKIET Co., Ltd.) was prepared.
The composition for a coating layer was coated on one surface of the substrate by using a Doctor blade and dried at room temperature to form a 3 $\mu$m-thick coating layer. Accordingly, a separator of Example 1 was obtained.

**(3) Manufacture of Rechargeable Lithium Battery Cell**

$LiCoO_2$ as a positive electrode active material, polyvinylidene fluoride as a binder (tradename: KF1100), and denkablack as a conductive material were mixed in a weight ratio of 92.5:3.5:4, and this mixture was added to an N-Methyl-2-pyrrolidone solvent to a solid content of about 30 wt%, preparing positive electrode mixture slurry.
The positive electrode mixture slurry was coated on an aluminum foil (Al foil, thickness: 15 $\mu$m) as a positive electrode current collector by using a Doctor blade and roll-pressed, manufacturing a positive electrode. The positive electrode had a loading amount of about 14.6 mg/cm$^2$ and rolling density of about 3.1 g/cm$^3$.
The positive electrode was wound into a circular shape with a diameter of 12 mm and then, used with a lithium metal as a counter electrode and the separator of Example 1, manufacturing a 2032-type rechargeable lithium battery cell (coin half-cell). Herein, an electrolyte solution was prepared by mixing ethylenecarbonate, diethylenecarbonate, and fluoroethylenecarbonate in a weight ratio of 2:6:2 and dissolving 1.3 M $LiPF_6$ in the mixed solvent.

**Example 2**

As an organic filler among three-dimensional structured particles, an irregular and crosslinked acrylate-based copolymer(PMMA) having a weight average molecular weight of 300,000 g/mol and a diameter of 200 nm was prepared. In addition, as wire-type particles, boehmite having a length of 0.5 $\mu$m and a diameter of 30 nm was prepared.
A composition for a coating layer, a separator, and a rechargeable lithium battery cell according to Example 2 were prepared in the same manner as in Example 1 except that the above organic filler and wire-type particles were used.

**Example 3**

As an organic filler among three-dimensional structured particles, an irregular and crosslinked acrylate-based copolymer(PMMA) having a weight average molecular weight of 300,000 g/mol and a diameter of 200 nm was prepared. In addition, as wire-type particles, boehmite having a length of 0.3 $\mu$m and a diameter of 30 nm was prepared.
A composition for a coating layer, a separator, and a rechargeable lithium battery cell according to Example 3 were prepared in the same manner as in Example 1 except that the above organic filler and wire-type particles were used.

**Example 4**

As an organic filler among three-dimensional structured particles, an irregular and crosslinked acrylate-based copolymer(PMMA) having a weight average molecular weight of 300,000 g/mol and a diameter of 500 nm was prepared. In addition, as wire-type particles, boehmite having a length of 0.3 $\mu$m and a diameter of 30 nm was prepared.
A composition for a coating layer, a separator, and a rechargeable lithium battery cell according to Example 4 were prepared in the same manner as in Example 1 except that the above organic filler and wire-type particles were used.

**Example 5**

As an organic filler among three-dimensional structured particles, an irregular and crosslinked acrylate-based copolymer(PMMA) having a weight average molecular weight of 300,000 g/mol and a diameter of 100 nm was prepared. In addition, as wire-type particles, boehmite having a length of 0.3 $\mu$m and a diameter of 30 nm was prepared.
A composition for a coating layer, a separator, and a rechargeable lithium battery cell according to Example 5 were prepared in the same manner as in Example 1 except that the above organic filler and wire-type particles were used.

**Example 6**

As an organic filler among three-dimensional structured particles, the same acrylate-based copolymer as in Example 3 was prepared. In addition, amorphous alumina ($Al_2O_3$) with a diameter of 100 nm was added as an inorganic filler; and the same boehmite as in Example 3 was prepared as wire-type particles.
A composition for a coating layer according to Example 6 was prepared by mixing the organic filler, the inorganic filler, and the wire-type particles in a weight ratio of 10:10:80 in water as a solvent.

A separator and a rechargeable lithium battery according to Example 6 were prepared in the same manner as in Example 1 except that the above composition for a coating layer was used.

**Example 7**

As an inorganic filler among three-dimensional structured particles, amorphous alumina having a diameter of 300 nm was used. A composition for a coating layer, a separator, and a rechargeable lithium battery cell according to Example 7 were prepared in the same manner as in Example 6 except that the above inorganic filler was used.

**Example 8**

As an inorganic filler among three-dimensional structured particles, amorphous alumina having a diameter of 600 nm was used. A composition for a coating layer, a separator, and a rechargeable lithium battery cell according to Example 8 were prepared in the same manner as in Example 6 except that the above inorganic filler was used.

**Example 9**

As an inorganic filler among three-dimensional structured particles, amorphous alumina having a diameter of 800 nm was used. A composition for a coating layer, a separator, and a rechargeable lithium battery cell according to Example 9 were prepared in the same manner as in Example 6 except that the above inorganic filler was used.

**Example 10**

As an inorganic filler among three-dimensional structured particles, amorphous alumina having a diameter of 1,000 nm was used. A composition for a coating layer, a separator, and a rechargeable lithium battery cell according to Example 10 were prepared in the same manner as in Example 6 except that the above inorganic filler was used.

**Comparative Example 1**

A composition for a coating layer, a separator, and a rechargeable lithium battery cell according to Comparative Example 1 were prepared in the same manner as in Example 3 except that no wire-type particles were used.

**Comparative Example 2**

A composition for a coating layer, a separator, and a rechargeable lithium battery cell according to Comparative Example 2 were prepared in the same manner as in Example 3 except that no organic filler was used.

**Comparative Example 3**

A styrene butadiene rubber (SBR) having a weight average molecular weight of 200,000 g/mol as a solution-type organic adhesive without using a three-dimensional structured organic filler; and the same boehmite as in Example 3 as wire-type particles were prepared.
A composition for a coating layer, a separator, and a rechargeable lithium battery cell according to Comparative Example 3 were prepared in the same manner as in Example 3 except that the above styrene butadiene rubber (SBR) and the boehmite were used.

**Comparative Example 4**

A composition for a coating layer, a separator, and a rechargeable lithium battery cell according to Comparative Example 4 were prepared in the same manner as in Example 8 except that no wire-type particles were used.

**Comparative Example 5**

A styrene butadiene rubber (SBR) having a weight average molecular weight of 200,000 g/mol as an organic adhesive instead of the organic filler was prepared, but no wire-type particles were used.
A composition for a coating layer, a separator, and a rechargeable lithium battery cell according to Comparative Example 5 were prepared in the same manner as in Example 8 except that the above styrene butadiene rubber (SBR) and no wire-type particles were used.

For reference, the wire-type particles and the three-dimensional structured particles according to Examples 1 to 10 and Comparative Examples 1 to 5 are summarized in Table 1.

(Table 1)

| | Wire-type particle | | Three-dimensional structured particle | | | |
| | | | Organic filler | | Inorganic filler | |
| | length (nm) | weight (parts by weight) | diameter (nm) | weight (parts by weight) | diameter (nm) | weight (parts by weight) |
|---|---|---|---|---|---|---|
| Ex. 1 | 1,000 | 80 | 200 | 20 | (unused) | |
| Ex. 2 | 500 | | 200 | | | |
| Ex. 3 | 300 | | 200 | | | |
| Ex. 4 | 300 | | 500 | | | |
| Ex. 5 | 300 | | 100 | | | |
| Comp. Ex. 1 | (unused) | | 200 | 100 | | |
| Comp. Ex. 2 | 300 | 100 | (unused) | | | |
| Comp. Ex. 3 | 300 | 100 | (organic adhesive was used) | | | |
| Ex. 6 | 300 | 80 | 200 | 10 | 100 | 10 |
| Ex. 7 | 300 | | 200 | | 300 | |
| Ex. 8 | 300 | | 200 | | 600 | |
| Ex. 9 | 300 | | 200 | | 800 | |
| Ex. 10 | 300 | | 200 | | 1,000 | |
| Comp. Ex. 4 | (unused) | | 200 | | 600 | 90 |
| Comp. Ex. 5 | | | (organic adhesive was used) | | 600 | 100 |

**Evaluation Example 1: Separator Evaluation**

The separators according to Examples 1 to 10 and Comparative Examples 1 to 5 were evaluated under the following conditions.

**(1) Binding Force**

After attaching a tape with a width of 12 mm and a length of 150 mm onto the coating layer of each of the separators, the separator was uniformly pressed with a hand roller. The separator was cut into a size extended by 2.0 mm each based on the length and width of the tape, preparing a sample.

After separating the tape-adhered side 10 mm to 20 mm apart from the substrate and then, fixing the substrate with no tape into an upper grip and the tape-adhered side into a lower grip with a gap of 20 mm between the upper and lower grips, the tape-adhered side was peeled off by pulling in a 180 ° direction by using UTM (Instron Corp.). Herein, the peeling was performed at 20 mm/min, and a force required for 40 mm peeling was three times measured and averaged. The measurement results are shown in Table 2.

**(2) Thermal Shrinkage Rate**

Each separator of Examples 1 to 10 and Comparative Examples 1 to 5 was cut into a size of a width (MD) of about 10 cm × a length (TD) of about 10 cm, stored in a 200 °C chamber for 10 minutes, and then, measured with respect to shrinkage rates of the separator in the MD direction and the TD direction, and the results are shown in Table 2.

(Table 2)

| | Adhesion force (gf) | Thermal shrinkage rate @ 200 °C, 1hr (%) | |
|---|---|---|---|
| | | MD | TD |
| Example 1 | 13 | 2 | 3 |
| Example 2 | 12 | 2 | 2 |
| Example 3 | 14 | 1 | 1 |
| Example 4 | 13 | 3 | 3 |
| Example 5 | 12 | 2 | 3 |
| Comparative Example 1 | 12 | 32 | 35 |
| Comparative Example 2 | 13 | 18 | 23 |
| Comparative Example 3 | 13 | 25 | 27 |
| Example 6 | 12 | 2 | 3 |
| Example 7 | 13 | 2 | 3 |
| Example 8 | 13 | 3 | 4 |
| Example 9 | 13 | 4 | 3 |
| Example 10 | 12 | 4 | 4 |
| Comparative Example 4 | 12 | 7 | 8 |
| Comparative Example 5 | 13 | 8 | 10 |

Referring to Table 1, the separators of Examples 1 to 10 secured an appropriate binding force as well as exhibited excellent heat resistance, compared with Comparative Examples 1 to 5.

For example, in the separators of Examples 1 to 5, one side of a substrate was coated by mixing an organic filler as three-dimensional structured particles and wire-type particles.

Based on that of Example 3 among them, each separator of Comparative Examples 1 to 3 was prepared by excluding the wire-type particles or replacing the organic filler with an organic adhesive. These separators of Comparative Examples 1 to 3, based on the separator of Example 3, exhibited a significantly increased thermal shrinkage rate and a partially deteriorated binding force between the substrate and coating layer.

In addition, in the separators of Examples 6 to 10, one side of a substrate was coated by mixing an organic filler and an inorganic filler as three-dimensional structured particles with wire-type particles.

Based on that of Example 8 among them, each separator of Comparative Examples 4 and 5 was prepared by excluding the wire-type particles or replacing the organic filler with an organic adhesive without using the wire-type particles. These separators of Comparative Examples 4 and 5, based on the separator of Example 8, exhibited a significantly increased thermal shrinkage rate and a partially deteriorated binding force between the substrate and coating layer.

On the other hand, the separators of Examples 1 to 5 exhibited equivalent thermal shrinkage rate and binding force to those of Examples 6 to 10. Accordingly, as long as one surface of a substrate was coated by mixing an organic filler as three-dimensional structured particles and wire-type particles, excellent heat resistance was not only achieved, but also an appropriate binding force was secured. If the inorganic filler was added as three-dimensional structured particles, heat resistance of a separator was enhanced, but excellent heat resistance was not achieved by the organic filler alone.

Herein, examples of coating one surface of a substrate alone were provided, but when both surfaces of the substrate are coated, the effect of enhancing the heat resistance of a separator is inferred to be further improved.

**Evaluation Example 2: Evaluation of Rechargeable Lithium Battery Cells**

The rechargeable lithium battery cells of Examples 1 to 10 and Comparative Examples 1 to 5 were charged and discharged under the following conditions.

This charge and discharge experiment was performed at room temperature (25 °C), wherein initial formation efficiency was evaluated at 0.1 C charge/0.1 C discharge, cycle-life was evaluated by 200 times repeating 1 C charge/1C discharge and then, calculating capacity retention (capacity retention ratio) according to Equation 1, and the results are shown in Table 3.

[Equation 1]

$$\text{Capacity retention rate [\%]} = [\text{Discharge capacity at each cycle} / \text{Discharge capacity in the 1}^{\text{st}} \text{ cycle}] \times 100$$

(Table 3)

|  | Initial formation efficiency (%) | Cycle-life (capacity retention after 200 cycles, %) |
|---|---|---|
| Example 1 | 88.4 | 94.0 |
| Example 2 | 88.3 | 94.2 |
| Example 3 | 88.8 | 95.3 |
| Example 4 | 88.5 | 94.5 |
| Example 5 | 88.5 | 94.5 |
| Comparative Example 1 | 87.3 | 92.2 |
| Comparative Example 2 | 88.3 | 93.0 |
| Comparative Example 3 | 87.2 | 93.1 |
| Example 6 | 88.4 | 94.7 |
| Example 7 | 88.9 | 95.5 |
| Example 8 | 88.9 | 95.4 |
| Example 9 | 88.5 | 94.4 |
| Example 10 | 88.6 | 94.7 |
| Comparative Example 4 | 88.2 | 93.4 |
| Comparative Example 5 | 87.3 | 93.0 |

According to Table 2, the rechargeable lithium battery cells of Examples 1 to 10 ensured an appropriate level of initial formation efficiency, while exhibiting a longer cycle-life, compared to the rechargeable lithium battery cells of Comparative Examples 1 to 5.

In summary of the results of Tables 1 and 2, the rechargeable lithium battery cells of Examples 1 to 10 exhibited excellent heat resistance, compared with the rechargeable lithium battery cells of Comparative Examples 1 to 5, which will contribute to safe driving of high-capacity and high-power rechargeable lithium batteries.

**Claims**

1. A separator (113) for a rechargeable lithium battery (100), comprising a substrate (10) and a coating layer (20) on at least one surface of the substrate (10);

   wherein the coating layer (20) includes
   three-dimensional structured particles (1) including an organic filler; and
   wire-type particles (2), wherein an average length of the wire-type particles (2) is at least 5 times as large as their average diameter, wherein the average length and the average diameter of the wire-type particles are each independently, the average length and the average diameter measured by scanning electronic microscope (SEM) analysis.

2. The separator for a rechargeable lithium battery of claim 1, wherein
a ratio of the average length of the wire-type particles (2) and an average diameter (D50) nm measured by laser diffraction of the three-dimensional structured particles (1) is 30:1 to 1:10.

3. The separator for a rechargeable lithium battery of claim 1 or 2, wherein

the diameter of the three-dimensional structured particles (1) is 100 nm to 1,000 nm; and/or
the length of the wire-type particles (2) is 100 nm to 3 $\mu$m and the diameter of the wire-type particle is 1 nm to 100 nm.

4. The separator for a rechargeable lithium battery of any one of the preceding claims, wherein

a weight ratio of the wire-type particles (2) and the three-dimensional structured particles (1) is 98:2 to 2:98; and/or
the three-dimensional structured particles (1) have a spherical shape, an elliptical shape, or a polyhedron shape.

5. The separator for a rechargeable lithium battery of claim 1, wherein
the organic filler includes a crosslinked acrylate-based copolymer, a poly(vinylidene fluoride, PVdF)-based copolymer, a styrene-acrylate-based copolymer, an acrylic acid-based copolymer, or a combination thereof.

6. The separator for a rechargeable lithium battery of any one of the preceding claims, wherein
the three-dimensional structured particles (1) further include an inorganic filler.

7. The separator for a rechargeable lithium battery of claim 6, wherein
the inorganic filler includes $Al_2O_3$, boehmite, $B_2O_3$, $Ga_2O_3$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, or a combination thereof.

8. The separator for a rechargeable lithium battery of any one of the preceding claims, wherein
the wire-type particles include fibrillar boehmite, carbon nanotube, silver nanowire, carbonization boron nanowire, nano cellulose, copper hydroxide nanowire, silicon monoxide nanowire, hydroxy apatite nanowire, or a combination thereof.

9. The separator for a rechargeable lithium battery of any one of the preceding claims, wherein
the coating layer (20) further includes at least one binder selected from polyvinylidene fluoride (PVdF), a styrene-butadiene rubber (SBR), carboxymethylcellulose (CMC), a polyvinylidene fluoride-hexafluoropropylene (PVdF-HFP) copolymer, ethylene vinyl acetate (EVA), hydroxyethyl cellulose (HEC), polyvinyl alcohol (PVA), polyvinyl butyral (PVB), an ethylene-acrylic acid copolymer, acrylonitrile, a vinyl acetate derivative, polyethylene glycol, and an acrylic rubber.

10. The separator for a rechargeable lithium battery of claim 9, wherein
a ratio of a total weight of the three-dimensional structured particles and the wire-type particles to a weight of the binder is 10:1 to 50:1.

11. The separator for a rechargeable lithium battery of any one of the preceding claims, wherein
a thickness of the coating layer (20) is 10 $\mu$m or less.

12. The separator for a rechargeable lithium battery of any one of the preceding claims, wherein
the substrate (10) includes polyolefin, polyester, polytetrafluoroethylene (PTFE), polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, a glass fiber, or a combination thereof.

13. The separator for a rechargeable lithium battery of any one of the preceding claims, wherein
a thickness of the substrate (10) is 1 to 40 $\mu$m.

14. The separator for a rechargeable lithium battery of any one of the preceding claims, wherein
the separator (113) has an average shrinkage rate of 5% or less in a longitudinal direction (MD direction) and a transverse direction (TD direction) measured after exposure at 150 to 250 °C for 1 hour.

15. A rechargeable lithium battery (100), comprising

a positive electrode (114);
a negative electrode (112); and
the separator (113) of any one of the preceding claims between the positive electrode (114) and the negative electrode (112).

# FIG. 1

<u>1</u>

diameter

## FIG. 2

2

diameter

length

# FIG. 3

<u>20</u>

FIG. 4

<u>20</u>

# FIG. 5

113

## FIG. 6

<u>113</u>

# FIG. 7

**EUROPEAN SEARCH REPORT**

Application Number

EP 23 20 6290

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 071 873 A1 (SAMSUNG SDI CO LTD [KR]) 12 October 2022 (2022-10-12) * abstract * * paragraphs [0021] - [0028] * * examples 1-7 * * paragraph [0038] * * claims 1-15 * | 1-15 | INV. H01M10/0525 H01M50/417 H01M50/42 H01M50/426 H01M50/431 H01M50/443 H01M50/446 H01M50/451 |
| X | US 2022/311093 A1 (JI SANG YOON [KR]) 29 September 2022 (2022-09-29) * abstract * * paragraphs [0032] - [0036] * * examples 1, 2 * * table 1 * * claims 1-20 * | 1-15 | |
| A | EP 3 618 145 A1 (SAMSUNG SDI CO LTD [KR]) 4 March 2020 (2020-03-04) * abstract * * paragraphs [0010] - [0013] * * paragraphs [0053] - [0066] * * claims 1-14 * | 1-15 | |

TECHNICAL FIELDS
SEARCHED     (IPC)

H01M

The present search report has been drawn up for all claims

| Place of search | Date of completion of the search | Examiner |
|---|---|---|
| Munich | 24 May 2024 | Stachowiak, Olaf |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 20 6290

This annex lists the patent family members relating to the patent documents cited in the above-mentioned European search report.
The members are as contained in the European Patent Office EDP file on
The European Patent Office is in no way liable for these particulars which are merely given for the purpose of information.

24-05-2024

| Patent document cited in search report | | Publication date | Patent family member(s) | | Publication date |
|---|---|---|---|---|---|
| EP 4071873 | A1 | 12-10-2022 | CN | 115133224 A | 30-09-2022 |
| | | | EP | 4071873 A1 | 12-10-2022 |
| | | | KR | 20220134170 A | 05-10-2022 |
| | | | US | 2022311095 A1 | 29-09-2022 |
| US 2022311093 | A1 | 29-09-2022 | CN | 115117554 A | 27-09-2022 |
| | | | EP | 4064444 A1 | 28-09-2022 |
| | | | KR | 20220132332 A | 30-09-2022 |
| | | | US | 2022311093 A1 | 29-09-2022 |
| EP 3618145 | A1 | 04-03-2020 | CN | 110875452 A | 10-03-2020 |
| | | | EP | 3618145 A1 | 04-03-2020 |
| | | | HU | E057807 T2 | 28-06-2022 |
| | | | KR | 20200026595 A | 11-03-2020 |
| | | | PL | 3618145 T3 | 21-02-2022 |
| | | | US | 2020075910 A1 | 05-03-2020 |
| | | | US | 2024097181 A1 | 21-03-2024 |

EPO FORM P0459

For more details about this annex : see Official Journal of the European Patent Office, No. 12/82